# DEMANDE DE BREVET EUROPEEN

(11) **EP 4 613 612 A1**
(43) Date de publication de la demande: **10.09.2025**
(21) Numéro de dépôt: 24305346.9
(22) Date de dépôt: 07.03.2024
(51) Int. Cl.: B62D 1/19

(54) **COLONNE DE DIRECTION D'UN VÉHICULE AUTOMOBILE**

(71) Demandeur: JTEKT COLUMN SYSTEMS FRANCE SAS, 25350 Mandeure (FR)
(72) Inventeur: LIDOINE, Eric, 25700 MATHAY (FR); CHOLLEY, Fabien, 25260 MONTENOIS (FR); BEVALOT, Julien, 25150 GOUX-LES-DAMBELIN (FR)
(74) Mandataire: Lavoix

(57) **Abrégé**

Une colonne de direction (10) d'un véhicule automobile comprend :
- un axe (12) de colonne de direction,
- une bride (14) définissant un passage de réception (18) de l'axe (12), et
- une platine (16) comprenant une partie principale (34) et au moins une aile (36), l'aile (36) comprenant une première extrémité (46) et une deuxième extrémité (48), la première extrémité (46) comprenant une fixation libérable (19) de la bride (14).

La platine (16) comprend un système d'absorption d'énergie (38) coopérant avec la bride (14) pour absorber une partie de l'énergie du crash longitudinal.

Le système d'absorption d'énergie (38) comprend au moins une languette (62) ménagée sur l'aile (36) et déformée par la bride (14) lorsque celle-ci se déplace longitudinalement à partir de sa position nominale sous l'action de l'effort (F) de crash longitudinal.

## Description

La présente invention concerne une colonne de direction de véhicule automobile.

Un véhicule automobile comporte habituellement un volant réglable en profondeur, notamment pour des raisons de confort du conducteur. A cet effet, le volant est porté par une colonne de direction et est réglable en hauteur et/ou selon la direction longitudinale.

Pour des raisons de sécurité, la colonne de direction comprend habituellement en outre un système d'absorption d'énergie qui, lors d'un choc, permet à la colonne de direction de se rétracter.

On connaît de l'état de la technique, des colonnes de direction dans lesquelles le système d'absorption d'énergie comprend des lames déchirables, qui lors d'un choc, se déplacent par rapport à la platine de la colonne de direction puis se déchirent.

Cependant, de tels systèmes d'absorption d'énergie ne sont pas entièrement satisfaisants, notamment en ce qu'il est nécessaire de remplacer les lames déchirables après un choc.

Par ailleurs, de tels systèmes d'absorption d'énergie sont généralement conçus pour un unique type et/ou taille de colonne de direction.

En outre, de tels systèmes d'absorption d'énergie, notamment les lames déchirables, sont peu économiques et complexes à assembler et à remplacer.

Un des buts de l'invention est de pallier ces inconvénients et, en particulier, de proposer une colonne de direction comprenant un système d'absorption d'énergie simple et économique.

Ainsi, l'invention a pour objet une colonne de direction d'un véhicule automobile comprenant :
- un axe de colonne de direction s'étendant selon une direction longitudinale,
- une bride définissant un passage de réception de l'axe de colonne de direction, et
- une platine destinée à être fixée au véhicule automobile, la platine comprenant une partie principale et au moins une aile, l'aile comprenant une première extrémité et une deuxième extrémité opposées l'unes de l'autres selon la direction longitudinale, la première extrémité comprenant une fixation libérable de la bride,

dans une position nominale, la bride étant fixée à la platine par la fixation libérable,
la bride étant susceptible de se déplacer longitudinalement par rapport à la platine à partir de sa position nominale sous l'action d'un effort de crash longitudinal sur la colonne de direction,
la platine comprenant, en outre, un système d'absorption d'énergie coopérant avec la bride pour absorber une partie de l'énergie du crash longitudinal.

Le système d'absorption d'énergie comprend au moins une languette ménagée sur l'aile et déformée par la bride lorsque celle-ci se déplace longitudinalement à partir de sa position nominale sous l'action de l'effort de crash longitudinal.

Selon des modes de réalisation particuliers de l'invention, la colonne de direction présente l'une ou plusieurs des caractéristiques optionnelles suivantes, prise(s) individuellement ou selon toute combinaison techniquement réalisable :
- la bride comprend une équerre déformant la languette lorsque la bride se déplace longitudinalement à partir de sa position nominale sous l'action de l'effort de crash longitudinal ;
- l'équerre comprend :
   - une branche verticale perpendiculaire à la direction longitudinale,
   - une branche horizontale sensiblement perpendiculaire à la branche verticale, et
   - un coude solidarisant la branche verticale et la branche horizontale,
   le coude déformant la languette lorsque la bride se déplace longitudinalement à partir de sa position nominale sous l'action de l'effort de crash longitudinal ;
- la fixation libérable comprend un crochet s'étendant en saillie de l'aile et recevant la branche horizontale de l'équerre dans la position nominale de la bride ;
- la partie principale comprend deux bords latéraux s'étendant chacun selon la direction longitudinale et opposés l'un de l'autre selon une direction transversale perpendiculaire à la direction longitudinale, l'aile s'étendant en saillie transversale de l'un des bords latéraux de la partie principale ;
- l'aile comprend deux lumières ménagées selon la direction longitudinale et définissant entre elles la languette ;
- au moins l'une des lumières est définie par une série d'orifices agencés les uns à côté des autres selon la direction longitudinale ;
- la languette comprend au moins une bosse ;
- la partie principale et l'aile sont venues de matière ; et
- la colonne comprend deux ailes, chacun des ailes s'étendant en saillie transversale de l'un des bords latéraux de la partie principale.

L'invention et ses avantages seront mieux compris à la lecture de la description qui suit, donnée uniquement à titre d'exemple non limitatif et faite en référence aux dessins annexés, parmi lesquels :
- [Fig 1] la Figure 1 est une vue schématique de côté d'une colonne de direction de véhicule automobile selon l'invention, le système d'absorption d'énergie étant en position de repos ;
- [Fig 2] la Figure 2 est une vue schématique de côté de la colonne de direction de la Figure 1, le système d'absorption d'énergie étant en une position intermédiaire ;
- [Fig 3] la Figure 3 est une vue schématique en coupe transversale de la colonne de direction de la Figure 1, le système d'absorption d'énergie étant dans la position intermédiaire de la Figure 2 ;
- [Fig 4] la Figure 4 est une vue schématique de côté de la colonne de direction de la Figure 1, le système d'absorption d'énergie étant en position active ;
- [Fig 5] la Figure 5 est une vue schématique en perspective de la platine de la colonne de direction de la Figure 1 ; et
- [Fig 6] la Figure 6 est une vue schématique de dessus d'une partie de l'aile d'une platine d'une colonne de direction selon une deuxième mode de réalisation de l'invention.

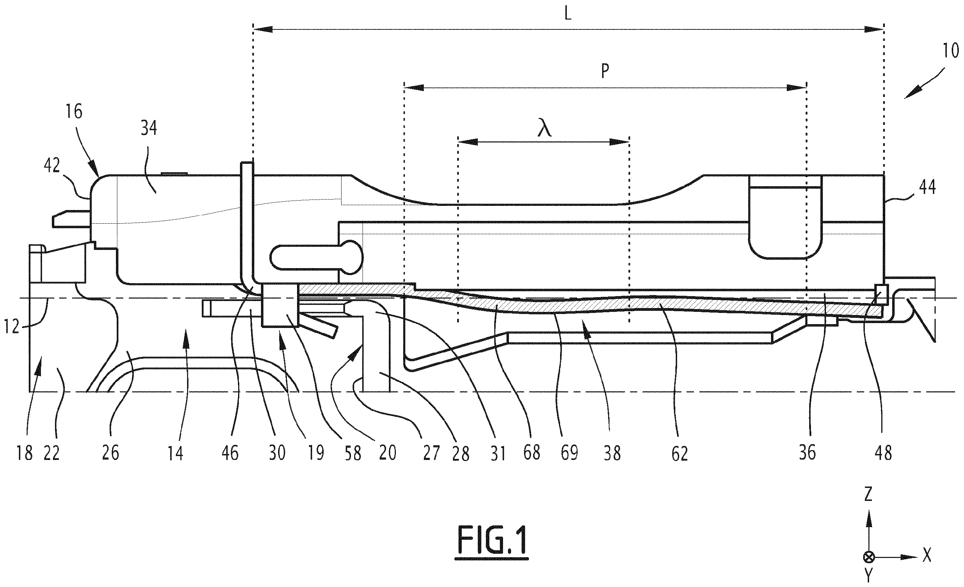

Les Figures 1 à 4 illustrent une colonne de direction 10 de véhicule automobile.

La colonne de direction 10 comprend un axe 12 de colonne de direction (représenté en pointillé sur les Figures) s'étendant selon une direction longitudinale X, une bride 14 et une platine 16.

On définit un repère orthogonal avec une direction transversale Y perpendiculaire à la direction longitudinale X et une direction d'élévation Z perpendiculaire à la direction longitudinale X et à la direction transversale Y.

De préférence, la colonne de direction 10 est réglable suivant la direction longitudinale X et/ou en hauteur.

En particulier, l'axe 12 de colonne de direction est par exemple un corps télescopique, de forme générale de révolution autour d'un axe longitudinal de révolution.

L'axe 12 est par exemple destiné à être relié cinématiquement, d'une part, à un volant (non représenté) du véhicule et, d'autre part, à un joint de Cardan (non représenté). On rappelle qu'un joint de Cardan est un dispositif mécanique permettant le couplage de deux arbres dont les axes géométriques concourent en un même point.

La bride 14 définit un passage de réception 18 de l'axe 12 de colonne de direction.

De préférence, l'axe 12 s'étend au moins partiellement dans le passage de réception 18 et est avantageusement solidaire de la bride 14, de sorte qu'un déplacement longitudinal de l'axe 12 entraine un déplacement longitudinal de la bride 14.

Dans une position nominale de la bride 14 illustrée sur la Figure 1, la bride 14 est solidaire à la platine 16, et plus particulièrement est fixée à la platine 16 par une fixation libérable 19.

La bride 14 est susceptible de se déplacer longitudinalement par rapport à la platine 16 à partir de sa position nominale sous l'action d'un effort F de crash longitudinale sur la colonne de direction, comme cela sera décrit plus en détails par la suite.

Par exemple, comme illustré sur les Figures, la bride 14 comprend au moins une équerre 20, et de préférence deux équerres 20.

En particulier, la bride 14 comprend deux flasques 22 espacés transversalement l'un de l'autre de manière à définir entre eux le passage de réception 18 de l'axe 12 de la colonne de direction 10.

De préférence, les deux flasques 22 sont sensiblement parallèles l'un à l'autre et sont sensiblement perpendiculaires à la direction d'élévation Z.

Plus particulièrement, chaque flasque 22 comprend une face interne 24 (non visible) et une face externe 26. Les faces internes 24 des deux flasques 22 s'étendent en regard l'une de l'autre et définissent entre elles le passage de réception 18.

La face externe 26 de chaque flasque 22 comprend de préférence un bord avant 25 et un bord arrière 27 opposés selon la direction longitudinale X.

Chaque équerre 20 est de préférence fixée sur l'un des flasques 22, et en particulier sur la face externe 26 du flasque 22 correspondant.

Chaque équerre 20 comprend par exemple une branche verticale 28, une branche horizontale 30 sensiblement perpendiculaire à la branche verticale 28 et un coude 31 solidarisant la branche verticale 28 et la branche horizontale 30.

Comme illustré sur la Figure 1, la branche verticale 28 de l'équerre 20 est par exemple perpendiculaire à la direction longitudinale X.

La branche verticale 28 de chaque équerre 20 est de préférence fixée sur le bord arrière 27 de la face externe 26 du flasque 22 correspondant.

La branche verticale 28 de chaque équerre 20 comprend un bord supérieur 32 et un bord inférieur (non visible).

La branche horizontale 30 de l'équerre 20 est par exemple perpendiculaire à la direction d'élévation Z.

Avantageusement, la branche horizontale 30 de chaque équerre 20 s'étend en saillie du bord supérieur 32 de la branche verticale 28 et de préférence en direction du bord avant 25 de la face externe 26 du flasque 22 correspondant. La platine 16 est destinée à être fixée sur le véhicule automobile, et en particulier au châssis (non illustré) du véhicule automobile.

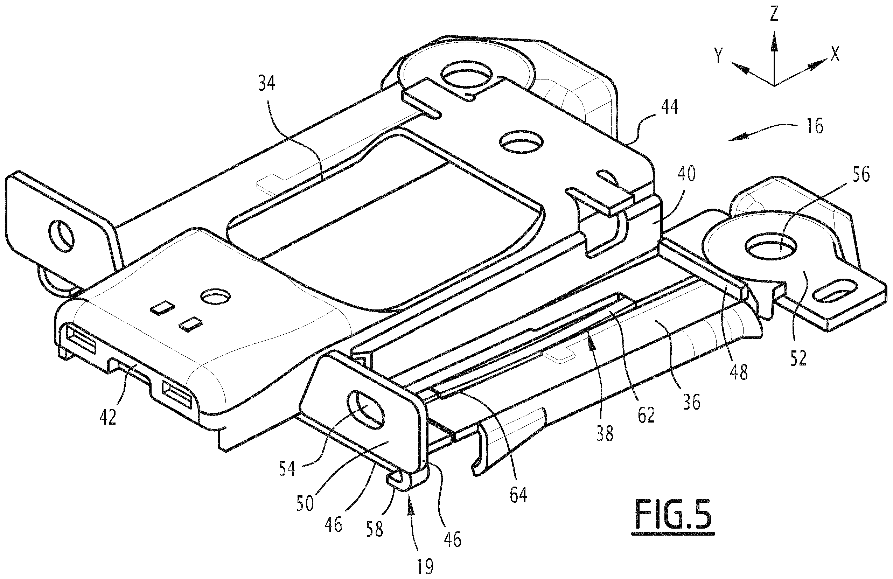

Comme illustré sur la Figure 5, la platine 16 comprend une partie principale 34, au moins une aile 36 et un système d'absorption d'énergie 38.

La platine 16 comprend également la fixation libérable 19 de la bride 14.

De préférence, la platine 16 comprend deux ailes 36.

Avantageusement, la platine 16 est fabriquée en une seule pièce.

Plus particulièrement, la partie principale 34 et la ou les aile(s) 36 sont venues de matière.

De préférence, la platine 16 est fabriquée en acier.

La partie principale 34 de la platine 16 comprend par exemple deux bords latéraux 40 s'étendant chacun selon la direction longitudinale X et opposés l'un de l'autre selon la direction transversale Y. Les deux bords latéraux 40 sont par exemple espacés d'une distance mesurée selon la direction transversale Y, comprise entre 5 cm et 10 cm.

Dans l'exemple illustré sur la Figure 5, la partie principale 34 présente une section transversale en U ouverte vers le bas.

La partie principale 34 comprend de préférence un bord avant 42 et un bord arrière 44 opposés selon la direction longitudinale X.

Chacune des ailes 36 s'étend de préférence en saillie transversale de l'un des bords latéraux 40 de la partie principale 34 de la platine 16.

De préférence, chacune des ailes 36 s'étend sensiblement perpendiculairement à la direction d'élévation Z.

Avantageusement, chacune des ailes 36 pourra être inclinée par rapport à la direction longitudinale X, de préférence vers le bas selon la direction d'élévation Z.

En particulier, chacune des ailes 36 forme avec la direction longitudinale X un angle α compris entre 2° et 4°.

De préférence, chacune des ailes 36 comprend un bord latéral 41 s'étendant selon la direction longitudinale X et opposé à la partie principale 34 selon la direction transversale Y.

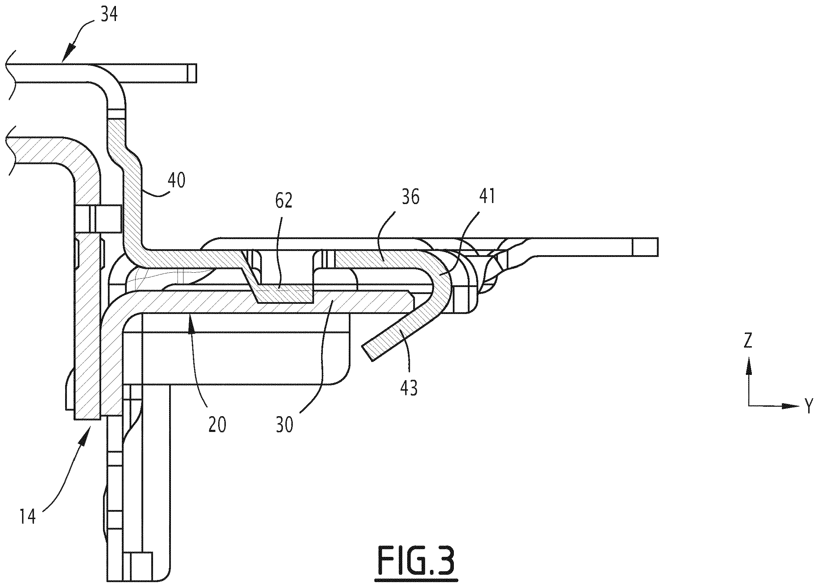

Avantageusement, comme cela est visible sur la Figure 3, le bord latéral 41 comprend un rebord présentant une section transversale sensiblement en forme de U et définissant ainsi une branche interne 43 s'étendant de manière inclinée sous l'aile 36. Avantageusement, la branche horizontale 30 de chaque équerre 20 est en contact avec ladite branche interne 43.

Chacune des ailes 36 comprend par exemple une première extrémité 46 et une deuxième extrémité 48 opposées selon la direction longitudinale X.

La première extrémité 46 définit par exemple une extrémité avant et la deuxième extrémité 48 définit par exemple une extrémité arrière.
La première extrémité 46 et la deuxième extrémité 48 de l'aile 36 sont par exemple espacés d'une distance mesurée selon la direction d'élévation Z, comprise entre 0, 01 cm et 2 cm.

La première extrémité 46 et la deuxième extrémité 48 de l'aile 36 sont par exemple espacées d'une distance L mesurée selon la direction longitudinale X, comprise entre 70 mm et 200 mm et correspondant à la longueur de l'aile 36.

Comme cela est visible sur la Figure 1, la première extrémité 46 de l'aile 36 s'étend par exemple en retrait du bord avant 42 de la partie principale 34. Autrement dit, le bord avant 42 de la partie principale 34 ne s'étend pas au regard de chacune des ailes 36.

Avantageusement, comme illustré sur la Figure 5, la platine 16 comprend, pour chacune des ailes 36, un élément de fixation avant 50 et un élément de fixation arrière 52 de la platine 16 sur le véhicule automobile.

L'élément de fixation avant 50 s'étend par exemple en saillie verticale de la première extrémité 46 de l'aile 36 et comprend par exemple un orifice 54 pour la fixation de la platine 16 sur le véhicule automobile.

L'élément de fixation arrière 52 s'étend par exemple en saillie longitudinale de la deuxième extrémité 48 de l'aile 36 et comprend par exemple des orifices 56 pour la fixation de la platine 16 sur le véhicule automobile. Plus particulièrement, l'élément de fixation arrière 52 prolonge l'aile 36 selon la direction longitudinale X au-delà du bord avant 44 de la partie principale 34.

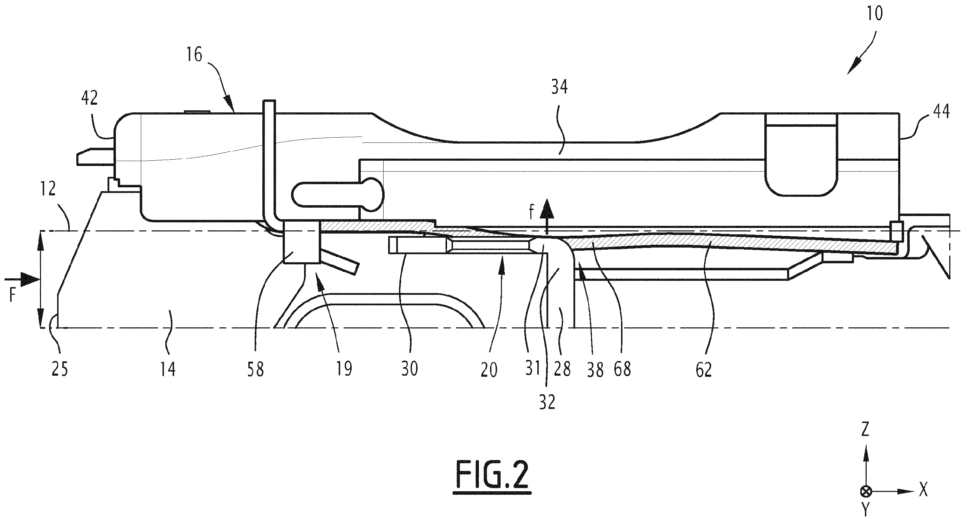

La fixation libérable 19 comprend un crochet 58 s'étendant en saillie de l'aile 36 et recevant la branche horizontale 30 de l'équerre 20 dans la position nominale de la bride 14 illustrée sur la Figure 2.

De préférence, le crochet 58 s'étend en saillie vers le bas de la première extrémité 46 de l'aile 36.

Le système d'absorption d'énergie 38 coopère avec la bride 14 pour absorber une partie de l'énergie d'un crash longitudinal sur la colonne de direction 10.

Le système d'absorption d'énergie 38 comprend au moins une languette 62 ménagée sur au moins une des ailes 36 et déformée par la bride 14 lorsque celle-ci se déplace longitudinalement à partir de sa position nominale sous l'action de l'effort F de crash longitudinal.

En particulier, la languette 62 est déformée plastiquement par la bride 14 lorsque celle-ci se déplace longitudinalement à partir de sa position nominale sous l'action de l'effort F de crash longitudinal.

Plus particulièrement, le coude 31 de l'équerre 20 de la bride 14 déforme, en particulier plastiquement, la languette 62 lorsque la bride 14 se déplace longitudinalement à partir de sa position nominale sous l'action de l'effort F de crash longitudinal, comme cela est visible sur la Figure 2.

De préférence, la languette 62 s'étend sensiblement selon la direction longitudinale X.

Dans l'exemple illustré sur les Figures, le système d'absorption d'énergie 38 comprend une unique languette 62 ménagée sur l'aile 36 gauche.

En variante, le système d'absorption d'énergie 38 comprend une unique languette 62 ménagée sur chacune des ailes 36.

Alternativement, le système d'absorption d'énergie 38 comprend une pluralité de languettes 62 ménagées sur chacune des ailes 36.

En particulier, au moins une des ailes 36 comprend deux lumières 64 ménagées selon la direction longitudinale X et définissant entre elles la languette 62.

Les deux lumières 64 ont de préférence une forme allongée selon la direction longitudinale X, et en particulier une faible largeur. Cette largeur des lumières 64 est notamment définie en fonction de l'épaisseur de la tôle formant l'aile 36 correspondante. Cette largeur est par exemple comprise entre 1,5 mm et 2,5 mm.

Chacune des lumières 64 s'étend sur une longueur I, notamment comprise entre 50 mm et 150 mm.

Les deux lumières 64 sont par exemple espacées d'une distance d mesurée selon la direction transversale Y, comprise entre 4 mm et 8 mm.

Comme illustré sur la Figure 5, chacune des lumières 64 définit par exemple un orifice de forme allongée et continu.

La languette 62 est de préférence définie entre les deux lumières 64, de sorte que la languette 62 présente une longueur l égale à celle des lumières 64 et une épaisseur d correspondant à la distance d entre les deux lumières 64.

En particulier, la languette 62 est solidaire de la platine 16 à ses deux extrémités.

De préférence, la languette 62 comprend au moins une bosse 68.

Comme cela est visible sur la Figure 1, la bosse 68 fait saillie vers le bas par rapport à la surface inférieure de l'aile 36.

La bosse 68 définit de préférence une surface de contact 69 tournée vers le bas selon la direction d'élévation Z.

La surface de contact 69 de la bosse 68 est de préférence configurée pour rentrer en contact avec l'équerre 20 lors d'un effort F de crash longitudinal, et en particulier avec le coude 31 de l'équerre 20.

Le comportement du système d'absorption d'énergie 38 lors d'un crash longitudinal va être décrit ci-dessous.

En particulier, lors d'un crash longitudinal, un effort F de crash longitudinal est exercé sur la colonne de direction 10. L'effort F s'étend selon la direction longitudinal X et est exercé sur l'axe 12 de la colonne de direction 10.

Sous l'action de l'effort F, l'axe 12 est par exemple déplacé longitudinalement vers l'arrière, ce qui entraine le déplacement de la bride 14 selon la direction longitudinale X à partir de sa position nominale et notamment vers la deuxième extrémité 48 de l'aile 36. La platine 16 reste avantageusement fixe.

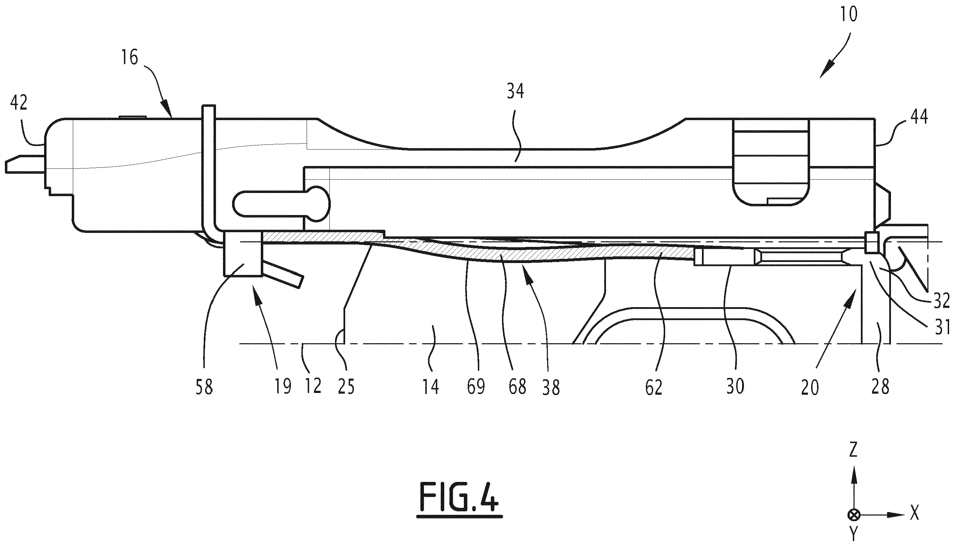

Sous l'action de l'effort F, la bride 14 est par exemple déplacée de sa position nominale jusqu'à une position finale illustrée sur la Figure 4, en passant par une position intermédiaire illustrée sur les Figures 2 et 3.

Comme cela est visible sur la Figure 2 dans la position intermédiaire de la bride 14, le coude 31 de l'équerre 20 rentre en contact avec la languette 62, et en particulier avec le fond 69 de la bosse 68. L'équerre 20 exerce ainsi une force f selon la direction d'élévation Z sur la languette 62, ce qui entraine une déformation de celle-ci, et plus particulièrement de la bosse 68. Ainsi, la languette 62 se déforme et absorbe l'énergie du crash longitudinal.

De préférence, dans la position intermédiaire de la bride 14, comme cela est illustré sur la Figure 3, la branche horizontale 30 de chaque équerre 20 est maintenue en contact avec la branche interne 43 du bord latéral 41 de l'aile 36, de sorte à maintenir l'équerre 20 de la bride 14 en pression contre l'aile 36 de la platine 36 et ainsi garantir le contact entre l'équerre 20 et la languette 62. Dans la position finale illustrée sur la Figure 4, l'équerre 20 n'est plus en contact avec la bosse 68.

La colonne de direction 10 selon l'invention comprenant une languette 62 déformable est particulièrement avantageuse, notamment grâce à la caractéristique selon laquelle la languette 62 est déformable.

De plus, la caractéristique selon laquelle la languette 62 est définie directement sur la platine 16 permet de simplifier la conception et la fabrication de la colonne de direction 10.

Par ailleurs, la forme et la taille de la languette 62 peuvent être facilement adaptées en fonction des contraintes de la colonne de direction 10. En particulier, chaque languette 62 peut être ménagée au moment de l'assemblage de la bride 14 sur la platine 16, ce qui permet de l'adapter à la colonne de direction 10 correspondante, et notamment suivant l'angle d'inclinaison de la colonne de direction 10 dans le véhicule.

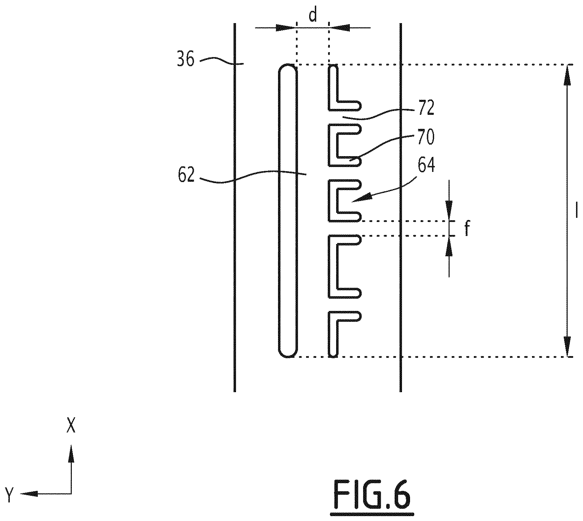

Alternativement, selon un deuxième mode de réalisation de l'invention illustré sur la Figure 6, au moins une des lumières 64 est définie par une série d'orifices 70 agencés les uns à côté des autres selon la direction longitudinale X.

Chacun de ces orifices 70 a par exemple une forme de U ou de L et est par exemple défini par poinçonnage dans l'aile 36 correspondante.

De préférence, comme cela est visible sur la Figure 6, les orifices 70 délimitent entre eux des ponts de matière 72 qui raccordent la languette 62 à l'aile 36.

Les ponts de matière 72 sont de préférence facilement déformables, de sorte à autoriser la déformation de la languette 62 telle que décrit ci-dessus.

A cet effet, les ponts de matière 72 ont par exemple une faible largeur f, et de préférence inférieure à 5 mm.

## Revendications

1. Colonne de direction (10) d'un véhicule automobile comprenant :
- un axe (12) de colonne de direction s'étendant selon une direction longitudinale (X),
- une bride (14) définissant un passage de réception (18) de l'axe (12) de colonne de direction, et
- une platine (16) destinée à être fixée au véhicule automobile, la platine (16) comprenant une partie principale (34) et au moins une aile (36), l'aile (36) comprenant une première extrémité (46) et une deuxième extrémité (48) opposées l'unes de l'autres selon la direction longitudinale (X), la première extrémité (46) comprenant une fixation libérable (19) de la bride (14),
dans une position nominale, la bride (14) étant fixée à la platine (16) par la fixation libérable (19),
la bride (14) étant susceptible de se déplacer longitudinalement par rapport à la platine (16) à partir de sa position nominale sous l'action d'un effort (F) de crash longitudinal sur la colonne de direction (10),
la platine (16) comprenant, en outre, un système d'absorption d'énergie (38) coopérant avec la bride (14) pour absorber une partie de l'énergie du crash longitudinal,
**caractérisée en ce que** le système d'absorption d'énergie (38) comprend au moins une languette (62) ménagée sur l'aile (36) et déformée par la bride (14) lorsque celle-ci se déplace longitudinalement à partir de sa position nominale sous l'action de l'effort (F) de crash longitudinal.

2. Colonne de direction (10) selon la revendication 1, dans laquelle la bride (14) comprend une équerre (20) déformant la languette (62) lorsque la bride (14) se déplace longitudinalement à partir de sa position nominale sous l'action de l'effort (F) de crash longitudinal.

3. Colonne de direction (10) selon la revendication 2, dans laquelle l'équerre (20) comprend :
- une branche verticale (28) perpendiculaire à la direction longitudinale (X),
- une branche horizontale (30) sensiblement perpendiculaire à la branche verticale (28), et
- un coude solidarisant la branche verticale (28) et la branche horizontale (30), le coude déformant la languette (62) lorsque la bride (14) se déplace longitudinalement à partir de sa position nominale sous l'action de l'effort (F) de crash longitudinal.

4. Colonne de direction (10) selon la revendication 3, dans laquelle la fixation libérable comprend un crochet (58) s'étendant en saillie de l'aile (36) et recevant la branche horizontale (30) de l'équerre (20) dans la position nominale de la bride (14).

5. Colonne de direction (10) selon l'une quelconque des revendications précédentes, dans laquelle la partie principale (34) comprend deux bords latéraux (40) s'étendant chacun selon la direction longitudinale (X) et opposés l'un de l'autre selon une direction transversale (Y) perpendiculaire à la direction longitudinale (X), l'aile (36) s'étendant en saillie transversale de l'un des bords latéraux (40) de la partie principale (34).

6. Colonne de direction (10) selon l'une quelconque des revendications précédentes, dans laquelle l'aile (36) comprend deux lumières (64) ménagées selon la direction longitudinale (X) et définissant entre elles la languette (62).

7. Colonne de direction (10) selon la revendication 6, dans laquelle au moins l'une des lumières (64) est définie par une série d'orifices (70) agencés les uns à côté des autres selon la direction longitudinale (X).

8. Colonne de direction (10) selon l'une quelconque des revendications précédentes, dans laquelle la languette (62) comprend au moins une bosse (68).

9. Colonne de direction (10) selon l'une quelconque des revendications précédentes, dans laquelle la partie principale (34) et l'aile (36) sont venues de matière.

10. Colonne de direction (10) selon l'une quelconque des revendications précédentes, comprenant deux ailes (36), chacun des ailes (36) s'étendant en saillie transversale de l'un des bords latéraux (40) de la partie principale (34).
